# EUROPÄISCHE PATENTSCHRIFT

(11) **EP 3 198 200 B1**
(45) Veröffentlichungstag und Bekanntmachung des Hinweises auf die Patenterteilung: **29.03.2023**
(21) Anmeldenummer: 15774978.9
(22) Anmeldetag: 04.09.2015
(51) Int. Cl.: F24C 7/08, G01K 7/22, G01K 1/14

(54) **KOCHFELD MIT SENSORELEMENT UND VERFAHREN ZUR HERSTELLUNG EINES KOCHFELDES**
HOB WITH SENSOR ELEMENT AND METHOD OF MANUFACTURING A HOB
PLAQUE DE CUISSON AVEC ÉLÉMENT DE DÉTECTION ET PROCÉDÉ DE FABRICATION D'UNE PLAQUE DE CUISSON

(30) Priorität: 24.09.2014 ES 201431390
(43) Veröffentlichungstag der Anmeldung: 02.08.2017
(73) Patentinhaber: BSH Hausgeräte GmbH, 81739 München (DE)
(72) Erfinder: ARRESE, Xavier, E-08870 Sitges (ES); CIRERA, Albert, E-08810 Sant Pere de Ribe (ES); LLORENTE GIL, Sergio, E-50009 Zaragoza (ES); PEITIVI ASENSIO, Arturo, E-50018 Zaragoza (ES); RIVERA PEMAN, Julio, E-50410 Cuarte de Huerva (Zaragoza) (ES); SERVERA, Llorenç, E-08224 Terrassa (ES)
(86) Internationale Anmeldenummer: PCT/IB2015/056737
(87) Internationale Veröffentlichungsnummer: WO 2016/046676

(56) Entgegenhaltungen:
- EP-A1- 0 286 217
- EP-A1- 0 313 141
- EP-A1- 0 929 991
- EP-A1- 1 182 405
- EP-A1- 2 166 815
- EP-A1- 2 175 265
- EP-A1- 2 506 269
- EP-A2- 0 437 356
- EP-A2- 2 169 315
- EP-B1- 0 929 991
- EP-B1- 2 856 037
- WO-A1-2008/003874
- WO-A1-2013/179193
- CN-A- 102 208 228
- DE-A1- 3 744 372
- DE-A1- 10 128 025
- DE-A1- 19 925 367
- US-A1- 2020 011 534
- US-B1- 6 787 047
- US-B2- 6 514 453

## Beschreibung

Die Erfindung geht aus von einem Kochfeld nach dem Oberbegriff des Anspruchs 1 und von einem Verfahren zur Herstellung eines Kochfelds nach dem Oberbegriff des Anspruchs 8.

Aus dem Stand der Technik sind Kochfelder bekannt, mit einem an einer Oberseite einer Kochfeldplatte aus Glaskeramik angeordneten Temperaturwiderstand.

Aus der EP 0286217 A1 ist ein Heizelement bekannt, welches eine Mehrzahl an Dickschicht-Widerstands-Leiterbahnen auf einem elektrisch isolierenden Substrat und Schaltmittel zur wahlweisen Verbindung einer oder mehrerer der Leiterbahnen mit einer Energieversorgung aufweist.

Aus der US 6514453 B2 ist ein Verfahren zur Überwachung einer Temperatur eines Mediums und ein Verfahren zur Herstellung eines Geräts mit Quantenbegrenzung zur Durchführung dieser Überwachung bekannt. Das Überwachungsprinzip basiert auf Änderungen der Impedanz von nanostrukturierten Geräten und kann zur Überwachung von Absolutwerten und Änderungen in Gasen, anorganischen und organischen Flüssigkeiten, Feststoffen, Suspensionen und Mischungen einer oder mehrerer dieser Phasen verwendet werden.

Aus der DE 3744372 A1 ist eine verbesserte Leistungssteueranordnung für ein Glaskeramikkochfeld bekannt, mit wenigstens einer Strahlungsheizeinheit, die unter der Glaskeramikkochfeldfläche angeordnet ist, und mit einer vom Benutzer betätigbaren Eingabetastatur, die es dem Benutzer ermöglicht, eine von mehreren Leistungseinstellungen für die Heizeinheit zu wählen.

Aus der CN 102208228 A ist ein Leimungsmittel für Elektroden und ein Verfahren zur Herstellung des Leimungsmittels bekannt.

Aus der EP 2 175 265 A1 ist ein Wasserstoffsensor bekannt. Der Wasserstoffsensor weist einen Temperatursensor auf. Der Wasserstoffsensor ist auf einem Substrat aufgedruckt, das bevorzugt von einer Polymerfolie oder polymerbeschichtetem Metall gebildet ist, wobei auch weniger geeignete Substrate wie Glas oder Keramik in Erwägung gezogen werden.

In der US 6,787,047 B1 wird ein Verfahren zur Fertigung eines Temperatursensors mittels Sputterns beschrieben. Der Sensor weist hierbei eine drei-dimensionale Interdigitalelektrodenanordnung auf.

Die Aufgabe der Erfindung besteht insbesondere darin, eine gattungsgemäße Kochfeldvorrichtung mit verbesserten Eigenschaften hinsichtlich einer Herstellung und/oder Befestigung bereitzustellen. Die Aufgabe wird durch die kennzeichnenden Merkmale der Patentansprüche 1 und 8 gelöst, während vorteilhafte Ausgestaltungen und Weiterbildungen der Erfindung den Unteransprüchen entnommen werden können.

Die Erfindung geht aus von einem Kochfeld mit einer Kochfeldvorrichtung mit zumindest einem Substrat und zumindest einem an dem zumindest einen Substrat angeordneten Sensorelement.

Es wird vorgeschlagen, dass das zumindest eine Sensorelement mittels eines Druckverfahrens auf das zumindest eine Substrat aufgebracht, insbesondere aufgedruckt, ist.

Unter einer "Kochfeldvorrichtung" soll in diesem Zusammenhang insbesondere zumindest ein Teil, insbesondere eine Unterbaugruppe, des Kochfelds verstanden werden. Insbesondere kann die Kochfeldvorrichtung auch das gesamte Kochfeld umfassen. Dabei ist das zumindest eine Substrat vorzugsweise zumindest im Wesentlichen plattenartig ausgebildet. Unter einer "zumindest im Wesentlichen plattenartigen" Ausgestaltung eines Objekts, soll insbesondere eine Ausgestaltung des Objekts verstanden werden, bei welcher ein minimaler, das Objekt gerade noch umhüllender gedachter Quader eine längste Kante aufweist, die wenigstens 10-mal, insbesondere zumindest 20-mal, vorzugsweise mindestens 30-mal und besonders vorteilhaft wenigstens 40-mal so lang ist, wie eine kürzeste Kante des Quaders. Eine kürzeste Kante des Quaders und/oder eine Dicke des zumindest einen Substrats und/oder eine Materialstärke des zumindest einen Substrats beträgt insbesondere zumindest 0,1 mm, vorteilhaft zumindest 0,5 mm, vorzugsweise zumindest 1 mm und besonders bevorzugt zumindest 2 mm und insbesondere höchstens 10 cm, vorteilhaft höchstens 5 cm, vorzugsweise höchstens 2 cm und besonders bevorzugt höchstens 1 cm. Vorzugweise weist das zumindest eine Substrat dabei eine zumindest im Wesentlichen konstante Dicke und/oder Materialstärke auf. In diesem Zusammenhang soll unter einer "zumindest im Wesentlichen konstanten" Dicke und/oder Materialstärke eines Objekts insbesondere eine Dicke und/oder Materialstärke verstanden werden, welche von einer über das Objekt gemittelten Dicke und/oder Materialstärke um höchstens 5 %, vorzugsweise höchstens 3 % und besonderes bevorzugt höchstens 1 % abweicht. Vorzugsweise ist das zumindest eine Substrat als eine Kochfeldplatte, insbesondere als eine Induktionskochfeldplatte, und/oder als Teil, insbesondere als Grundplatte, einer Kochfeldplatte, insbesondere einer Induktionskochfeldplatte, ausgebildet. Besonders bevorzugt ist das zumindest eine Sensorelement dabei auf einer Seite des zumindest einen Substrats angeordnet, welche in einem montierten Zustand des Kochfelds einem Inneren des Kochfelds zugewandt ist. Im Falle einer Ausbildung des zumindest einen Substrats als Grundplatte einer Kochfeldplatte ist das zumindest eine Sensorelement dabei an einer Innenseite und/oder Unterseite der Grundplatte angeordnet. Ferner soll unter einem "Sensorelement" insbesondere ein Element verstanden werden, welches zumindest in einem Betriebszustand eine, insbesondere von einer Messeinheit messbare, Kenngröße aufweist, welche, insbesondere eindeutig, einer Hausgerätekenngröße und/oder Umgebungskenngröße zugeordnet werden kann. Vorzugsweise ist das zumindest eine Sensorelement plattenartig ausgebildet, wobei insbesondere eine Haupterstreckungsebene des zumindest einen Sensorelements parallel zu einer Haupterstreckungsebene des zumindest einen Substrats ist. Vorzugsweise weist das zumindest eine Sensorelement eine, insbesondere zumindest im Wesentlichen konstante, Dicke und/oder Materialstärke zwischen 1 µm und 500 µm, vorteilhaft zwischen 30 µm und 300 µm, vorzugsweise zwischen 50 µm und 300 µm und besonders bevorzugt zwischen 70 µm und 150 µm auf.

Das zumindest eine Sensorelement ist mittels eines tintenstrahlartigen Druckverfahrens auf das zumindest eine Substrat aufgebracht, insbesondere aufgedruckt. Unter einem "tintenstrahlartigen Druckverfahren" soll insbesondere ein Matrixdruckverfahren verstanden werden, bei dem insbesondere zumindest eine Drucksubstanz, vorzugsweise eine elektrisch leitfähige Tinte, mittels eines Überdrucks von zumindest einer Düse eines Druckkopfs abgegeben wird, um auf zumindest einem Substrat, insbesondere dem zumindest einen Substrat, insbesondere unmittelbar, in separaten und/oder nebeneinanderliegenden, insbesondere ineinander übergehenden, Punkten, abgelagert zu werden. Insbesondere werden bei dem tintenstrahlartigen Druckverfahren Tröpfchen mit einem Volumen zwischen 1 pl und 100 pl (Pikoliter), vorzugsweise zwischen 3 pl und 80 pl und besonders bevorzugt zwischen 6 pl und 50 pl abgegeben. Vorzugsweise werden die Tröpfchen auf ausgewählte Punkte eines Rasters, das insbesondere eine Auflösung von mehr als 1 Rasterpunkt je Millimeter, insbesondere mehr als 3 Rasterpunkte je Millimeter, vorteilhaft mehr als 10 Rasterpunkte je Millimeter und besonders vorteilhaft mehr als 30 Rasterpunkte je Millimeter aufweist, aufgetragen, insbesondere unmittelbar auf das zumindest eine Substrat und insbesondere ohne zusätzliche Hilfsmittel, wie beispielweise einer Schablone. Insbesondere ist das tintenstrahlartige Druckverfahren dabei von einem Siebdruckverfahren, einem Kathodenzerstäubungsverfahren, einem Dickschichtverfahren und/oder einem Dünnschichtverfahren verschieden ausgebildet. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch diese Ausgestaltung kann ein gattungsgemäßes Kochfeld mit verbesserten Eigenschaften hinsichtlich einer Herstellung und/oder Befestigung von elektrischen und/oder elektronischen Bauelementen bereitgestellt werden. Insbesondere kann das zumindest eine Sensorelement vorteilhaft einfach und insbesondere in einem Arbeitsgang hergestellt und mit dem zumindest einen Substrat verbunden werden, insbesondere ohne zusätzliche Hilfsmittel. Somit kann ein Arbeitsaufwand vorteilhaft reduziert und Kosten gemindert werden. Ferner kann eine Messgenauigkeit und/oder eine Positionierung des zumindest einen Sensorelements vorteilhaft verbessert werden.

Vorzugsweise ist das zumindest eine Sensorelement zumindest teilweise, vorzugsweise zumindest zu einem Großteil und besonders bevorzugt vollständig aus einer elektrisch leitfähigen Tinte hergestellt. Vorzugsweise bildet die elektrisch leitfähige Tinte zumindest in einem ausgehärteten und/oder getrockneten Zustand das zumindest eine Sensorelement. Unter einer "elektrisch leitfähigen Tinte" soll in diesem Zusammenhang insbesondere eine Drucksubstanz verstanden werden, welche in zumindest einem Zustand zumindest teilweise flüssig ist, insbesondere einen spezifischen Widerstand von höchstens 10⁸ Ωm, vorzugsweise von höchstens 0,1 · 10⁻⁴ Ωm und besonders bevorzugt von höchstens 10⁶ Ωm aufweist und dabei vorzugsweise eine Viskosität zwischen 4 Pas und 20 Pas (Pascalsekunden), vorzugsweise zwischen 6 Pas und 15 Pas und besonders bevorzugt zwischen 8 Pas und 12 Pas aufweist, Insbesondere ist die zumindest eine elektrisch leitfähige Tinte in diesem Zustand als eine Suspension ausgebildet und kann insbesondere zumindest ein Lösungsmittel, vorzugsweise Ethylenglycol, aufweisen. Insbesondere kann die elektrisch leitfähige Tinte auch als halbleitende Tinte ausgebildet sein. Unter dem Ausdruck "zumindest zu einem Großteil" soll dabei insbesondere zu zumindest 70 %, vorteilhaft zu zumindest 80 %, vorzugsweise zu zumindest 90 % und besonders bevorzugt zu zumindest 95 % verstanden werden. Hierdurch kann das zumindest eine Sensorelement insbesondere vorteilhaft einfach und mit geringem Arbeitsaufwand hergestellt werden. Ferner kann eine Messgenauigkeit des zumindest einen Sensorelements vorteilhaft gesteigert werden. Das zumindest eine Sensorelement könnte beispielsweise als Magnetfeldsensor, insbesondere als Hallsensor und/oder magnetoresistiver Sensor, und/oder als Annäherungs- und/oder Berührungssensor ausgebildet sein. Das zumindest eine Sensorelement ist als Temperatursensor ausgebildet. Unter einem "Temperatursensor" soll insbesondere ein Sensorelement verstanden werden, das in zumindest einem Betriebszustand zumindest eine, insbesondere von einer Auswerteeinheit und/oder einer Messeinheit messbare, temperaturabhängige vorzugsweise elektrische Kenngröße aufweist, deren Wert zumindest in einem Temperaturbereich zwischen 0°C und 350°C, vorzugweise zwischen 10°C und 300°C und besonders bevorzugt zwischen 20°C und 250°C, insbesondere eindeutig, einer Temperatur, insbesondere einer Umgebungstemperatur und/oder vorzugsweise einer Temperatur des zumindest einen Substrats und/oder eines Teilbereichs des zumindest einen Substrats, zugeordnet werden kann. Dabei weist das zumindest eine Sensorelement insbesondere eine Flächenerstreckung von zumindest 0,5 × 0,5 mm², vorzugsweise von zumindest 1 × 2 mm², und von höchstens 10 × 10 mm², vorzugsweise von maximal 4 × 6 mm², auf. Vorzugsweise handelt es sich bei der Kenngröße um einen elektrischen Widerstand. Vorzugsweise weist das zumindest eine Sensorelement dabei zumindest in dem Temperaturbereich ein zumindest im Wesentlichen exponentielles Temperaturverhalten auf, insbesondere einen exponentiell steigenden und/oder fallenden elektrischen Widerstand und/oder eine exponentiell steigende und/oder fallende Leitfähigkeit. Besonders bevorzugt handelt es sich bei dem zumindest einen Sensorelement um einen Heißleiter und insbesondere bei dem elektrischen Widerstand um einen NTC-Widerstand. Dabei weist das zumindest eine Sensorelement insbesondere bei einer Temperatur von 25°C einen Widerstand zwischen 10 Ω und 10⁶ Ω und vorzugsweise zwischen 10² Ω und 10⁴ Ω auf. In diesem Zusammenhang soll unter einem "zumindest im Wesentlichen exponentiellen Temperaturverhalten" insbesondere ein Temperaturverhalten verstanden werden, welches von einem exponentiellen Temperaturverhalten um höchstens 15 %, vorzugsweise um höchstens 10 % und besonders bevorzugt um maximal 5 % abweicht. Hierdurch kann insbesondere eine vorteilhaft exakte Temperaturmessung und ein kostengünstiger Temperatursensor erreicht werden.

Das zumindest eine Sensorelement und/oder die zumindest eine elektrisch leitfähige Tinte besteht vorzugsweise zumindest teilweise und besonders vorteilhaft zumindest zu einem Großteil aus einem metalldotierten, beispielweise einem kupferdotierten und/oder einem nickeldotierten, Material. Vorteilhaft besteht das zumindest eine Sensorelement und/oder die zumindest eine elektrisch leitfähige Tinte dabei zumindest teilweise und vorzugsweise zumindest zu einem Großteil aus einem silberdotierten Material, insbesondere silberdotiertem Zinkoxid (ZnO+Ag). Unter dem Begriff "metalldotiert" soll dabei insbesondere versetzt mit Metallpartikeln, vorzugsweise Metallnanopartikeln, verstanden werden. Die Metallpartikel weisen dabei insbesondere eine Größe von maximal 10 µm, vorteilhaft von maximal 6 µm, vorzugsweise von maximal 4 µm und besonders bevorzugt von unter 1 µm auf. Hierdurch kann insbesondere eine Leitfähigkeit und/oder ein Nennwiderstand des zumindest einen Sensorelements vorteilhaft an verschiedene Bedürfnisse und/oder Anwendungsfälle angepasst werden.

Das zumindest eine Substrat kann insbesondere aus einem beliebigen einem Fachmann als sinnvoll erscheinenden Material bestehen, wie beispielweise zumindest teilweise, vorzugsweise zumindest zu einem Großteil und besonders bevorzugt vollständig aus Metall, insbesondere Stahl, Edelstahl und/oder Aluminium, Kunststoff und/oder einem Verbundwerkstoff. Vorteilhaft besteht das zumindest eine Substrat jedoch zumindest teilweise, vorzugsweise zumindest zu einem Großteil und besonders bevorzugt vollständig aus Glas und/oder Glaskeramik. Hierdurch können insbesondere elektrische Schaltkreise und/oder das zumindest eine Sensorelement unmittelbar und/oder direkt mit einem Teil einer Kochfeldplatte, verbunden werden, wodurch vorteilhaft Kosten reduziert werden können, da insbesondere keine zusätzlichen Leiterplatten und/oder weitere elektrische Bauelemente benötigt werden.

Ferner wird vorgeschlagen, dass die Kochfeldvorrichtung zumindest eine Kontaktierungseinheit aufweist, welche mittels eines weiteren, vorzugsweise tintenstrahlartigen, Druckverfahrens auf das zumindest eine Substrat aufgebracht, insbesondere aufgedruckt, ist. Unter einer "Kontaktierungseinheit" soll in diesem Zusammenhang insbesondere eine Einheit verstanden werden, welche zumindest ein Kontaktierungselement, insbesondere eine Leiterbahn und/oder eine Elektrode, umfasst und dazu vorgesehen ist, das zumindest eine Sensorelement mittelbar und/oder unmittelbar elektrisch zu kontaktieren und/oder vorzugsweise mit einer Auswerteeinheit und/oder einer Messeinheit zu verbinden. Als Drucksubstanz kann in diesem Fall insbesondere eine metalldotierte, insbesondere silberdotierte, nickeldotierte und/oder kupferdotierte, weitere elektrisch leitfähige Tinte eingesetzt werden, welche insbesondere in einem ausgehärteten und/oder getrockneten Zustand eine elektrische Leitfähigkeit von zumindest 0,1 · 10⁶ S/m (Siemens pro Meter), vorteilhaft von zumindest 0,7 · 10⁶ S/m, vorzugsweise von zumindest 10 · 10⁶ S/m und besonders bevorzugt von zumindest 30 · 10⁶ S/m bei einer Temperatur von 20°C aufweisen kann. Alternativ kann die zumindest eine Kontaktierungseinheit auch mittels eines anderen einem Fachmann als sinnvoll erscheinenden Druckverfahrens auf das zumindest eine Substrat aufgebracht werden, insbesondere durch ein Siebdruckverfahren, ein Kathodenzerstäubungsverfahren, ein Dickschichtverfahren und/oder ein Dünnschichtverfahren. Hierdurch kann insbesondere ein Arbeitsaufwand reduziert und/oder eine Herstellungszeit des Kochfelds verkürzt werden.

Weist die zumindest eine Kontaktierungseinheit zumindest ein Kontaktierungselement, insbesondere zumindest eine Elektrode, auf, welches zumindest teilweise zwischen dem zumindest einen Substrat und dem zumindest einen Sensorelement, insbesondere in einer Blickrichtung senkrecht zu einer Flächenerstreckung des zumindest einen Substrats, angeordnet ist, kann insbesondere eine stabile, zuverlässige sowie vorteilhafte elektrische Kontaktierung des zumindest einen Sensorelements erreicht werden. Ferner kann eine Messgenauigkeit vorteilhaft gesteigert werden.

In einer bevorzugten Ausgestaltung der Erfindung wird vorgeschlagen, dass die zumindest eine Kontaktierungseinheit zumindest ein Kontaktierungselement, insbesondere zumindest eine Elektrode, aufweist, welches als Interdigitalelektrode ("interdigitated electrode") ausgebildet ist. In diesem Zusammenhang soll unter einer "Interdigitalelektrode" insbesondere eine kammartig und/oder zumindest teilweise fingerartig ausgebildete Elektrode verstanden werden. Vorzugsweise weist die zumindest eine Kontaktierungseinheit zumindest zwei Kontaktierungselemente auf, welche jeweils als, insbesondere ineinandergreifende, Interdigitalelektroden ausgebildet sind. Hierdurch kann insbesondere eine Messempfindlichkeit vorteilhaft gesteigert und somit insbesondere eine Temperaturmessung verbessert werden. Ferner kann eine stabile Verbindung zwischen dem zumindest einen Kontaktierungselement, dem zumindest einen Sensorelement und dem zumindest einen Substrat geschaffen werden.

Die Erfindung geht ferner aus von einem Verfahren zur Herstellung eines Kochfelds mit zumindest einem Substrat und mit zumindest einem an dem zumindest einen Substrat angeordneten Sensorelement.

Erfindungsgemäß ist das zumindest eine Sensorelement mittels eines tintenstrahlartigen Druckverfahrens auf das zumindest eine Substrat aufgebracht, insbesondere aufgedruckt, wird, wobei das zumindest eine Sensorelement als Temperatursensor ausgebildet und eine Kochfeldplatte als das zumindest eine Substrat verwendet wird. Hierdurch kann das zumindest eine Sensorelement vorteilhaft einfach und insbesondere in einem Arbeitsgang hergestellt und mit dem zumindest einen Substrat verbunden werden, wodurch ein Arbeitsaufwand vorteilhaft reduziert und Kosten minimiert werden können.

Wird die zumindest eine elektrisch leitfähige Tinte zumindest im Wesentlichen bei Raumtemperatur aufgebracht, kann ein Herstellverfahren vorteilhaft vereinfacht werden. In diesem Zusammenhang soll unter der Wendung "zumindest im Wesentlichen bei Raumtemperatur" insbesondere eine Temperatur zwischen 5°C und 50°C, vorteilhaft zwischen 10°C und 40°C, vorzugsweise zwischen 15°C und 30°C und besonders bevorzugt zwischen 20°C und 25°C verstanden werden. Insbesondere wird die zumindest eine elektrisch leitfähige Tinte dabei zumindest teilweise flüssig aufgebracht.

Ferner wird vorgeschlagen, dass die zumindest eine elektrisch leifähige Tinte, insbesondere nach einem Auftrag auf das zumindest eine Substrat, bei einer Temperatur zwischen 150°C und 250°C, vorzugsweise zwischen 175°C und 225°C und besonders bevorzugt zwischen 190°C und 210°C während einer Zeit zwischen 4 min und 12 min, vorzugsweise zwischen 6 min und 10 min und besonders bevorzugt zwischen 7 min und 9 min ausgehärtet und/oder getrocknet wird, insbesondere durch Verdunstung des zumindest einen Lösungsmittels. Alternativ ist denkbar, dass die zumindest eine elektrisch leifähige Tinte, insbesondere nach einem Auftrag auf das zumindest eine Substrat, bei einer Temperatur zwischen 250°C und 350°C, vorzugsweise zwischen 275°C und 325°C und besonders bevorzugt zwischen 290°C und 310°C während einer Zeit zwischen 1 min und 7 min, vorzugsweise zwischen 2 min und 6 min und besonders bevorzugt zwischen 3 min und 5 min ausgehärtet und/oder getrocknet wird. Vorzugsweise wird die zumindest eine elektrisch leifähige Tinte dabei in einem Reflow-Ofen ausgehärtet. Alternativ oder zusätzlich ist denkbar, dass die zumindest eine leitfähige Tinte durch eine UV-Beleuchtung, in einem Trockenraum und/oder auf eine andere einem Fachmann als sinnvoll erscheinende Weise und/oder bei einer anderen einem Fachmann als sinnvoll erscheinenden Temperatur ausgehärtet und/oder getrocknet wird. Hierdurch kann insbesondere eine feste und/oder dauerhafte Verbindung zwischen der zumindest einen elektrisch leitfähigen Tinte und dem zumindest einen Substrat erreicht werden.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als Induktionskochfeld ausgebildetes Hausgerät mit einer Kochfeldvorrichtung in einer schematischen Draufsicht,
- Fig. 2: eine Innenseite eines als Induktionskochfeldplatte ausgebildeten Substrats der Kochfeldvorrichtung in einer vergrößerten Ansicht,
- Fig. 3: eine Innenseite eines als Induktionskochfeldplatte ausgebildeten Substrats einer weiteren Kochfeldvorrichtung mit zwei als Interdigitalelektroden ausgebildeten Kontaktelementen in einer vergrößerten Ansicht,
- Fig. 4: die Innenseite aus Figur 3 mit einem Sensorelement und
- Fig. 5: die Kochfeldvorrichtung aus Figur 3 in einer seitlichen Schnittansicht entlang der Linie V-V in Figur 4.

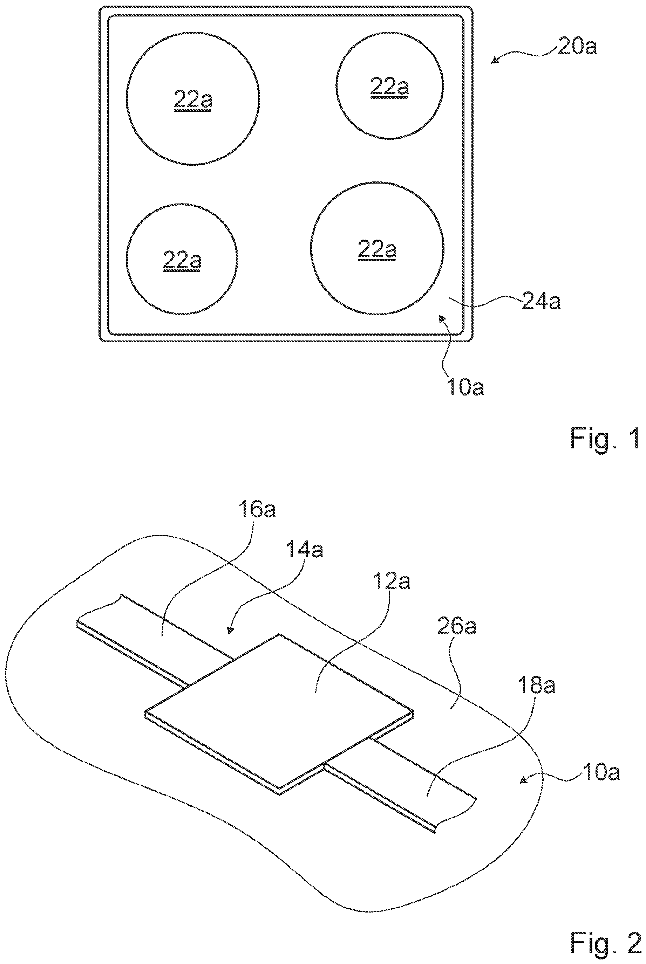

Figur 1 zeigt ein beispielhaftes als Induktionskochfeld ausgebildetes Hausgerät 20a in einer schematischen Draufsicht. Das Hausgerät 20a umfasst eine Kochfeldvorrichtung. Die Kochfeldvorrichtung weist ein Substrat 10a auf. In Figur 1 ist dabei eine Außenseite 24a des Substrats 10a gezeigt. Das Substrat 10a ist im vorliegenden Fall als Induktionskochfeldplatte ausgebildet. Das Substrat 10a besteht aus Glaskeramik. Das Substrat 10a ist zumindest im Wesentlichen plattenartig ausgebildet. Das Substrat 10a ist quaderförmig ausgebildet. Das Substrat 10a weist eine Länge von etwa 55 cm auf. Das Substrat 10a weist eine Breite von etwa 50 cm auf. Ferner weist das Substrat 10a eine konstante Dicke auf. Das Substrat 10a weist eine Dicke von 4 mm auf. Das Substrat 10a umfasst vier Heizzonen 22a.

Ferner weist die Kochfeldvorrichtung mehrere Sensorelemente 12a auf (vgl. auch Figur 2). Die Sensorelemente 12a sind unterhalb des Substrats 10a angeordnet. Im vorliegenden Fall ist jeder Heizzone 22a genau ein Sensorelement 12a zugeordnet. Jedes der Sensorelemente 12a ist im vorliegenden Fall unmittelbar in einem Bereich einer der Heizzonen 22a angeordnet. Die Sensorelemente 12a sind identisch miteinander. Alternativ ist auch denkbar, ein Sensorelement an einer beliebigen anderen Stelle eines Substrats anzuordnen. Ferner könnten zumindest einer Heizzone mehrere Sensorelemente zugeordnet sein.

Figur 2 zeigt eine Innenseite 26a des Substrats 10a. Die Innenseite 26a liegt dabei der Außenseite 24a gegenüber. Figur 2 zeigt dabei ein einzelnes der Sensorelemente 12a, so dass sich die Beschreibung im Folgenden auf eines der Sensorelemente 12a beschränkt, jedoch für die anderen Sensorelemente 12a übernommen werden kann.

Das Sensorelement 12a ist mittels eines tintenstrahlartigen Druckverfahrens auf die Innenseite 26a des Substrats 10a aufgebracht. Dabei ist das Sensorelement 12a aus einer elektrisch leitfähigen Tinte hergestellt. Im vorliegenden Fall besteht das Sensorelement 12a zumindest im Wesentlichen aus silberdotiertem Zinkoxid. Das Sensorelement 12a ist zumindest im Wesentlichen quaderförmig ausgebildet. Das Sensorelement 12a weist im vorliegenden Fall eine Länge von etwa 3 mm auf. Das Sensorelement 12a weist eine Breite von etwa 3 mm auf. Ferner weist das Sensorelement 12a eine zumindest im Wesentlichen konstante Dicke auf. Das Sensorelement 12a weist eine Dicke von etwa 100 µm auf. Alternativ kann ein Sensorelement auch eine beliebige andere Form, wie beispielweise rund, und/oder beliebige andere Dimensionen aufweisen.

Ferner ist das Sensorelement 12a als Temperatursensor ausgebildet. Im vorliegenden Fall ist das Sensorelement 12a als Heißleiter ausgebildet. Das Sensorelement 12a ist als NTC-Widerstand ausgebildet. Demnach weist das Sensorelement 12a einen negativen Temperaturkoeffizienten auf. Das Sensorelement 12a weist bei einer Temperatur von 25°C einen Nennwiderstand von etwa 10³ Ω auf. Das Sensorelement 12a weist ein exponentielles Temperaturverhalten auf. Das Sensorelement 12a weist dabei zumindest in einem Temperaturbereich zwischen 20°C und 250°C ein exponentielles Temperaturverhalten auf. Das Sensorelement 12a weist im vorliegenden Fall mit steigender Temperatur eine exponentiell steigende Leitfähigkeit auf. Das Sensorelement 12a weist bei einer Temperatur von 250°C eine etwa 10-mal höhere Leitfähigkeit als bei einer Temperatur von 20°C auf. Das Sensorelement 12a ist dazu vorgesehen, abhängig von einer Temperatur der Heizzone 22a seine Leitfähigkeit und/oder seinen elektrischen Widerstand zu verändern. Alternativ ist auch denkbar, ein Sensorelement als Kaltleiter auszubilden.

Die Kochfeldvorrichtung weist ferner eine Kontaktierungseinheit 14a auf. Die Kontaktierungseinheit 14a ist mittels eines Druckverfahrens auf die Innenseite 26a des Substrats 10a aufgebracht. Im vorliegenden Fall ist die Kontaktierungseinheit 14a mittels eines tintenstrahlartigen Druckverfahrens auf die Innenseite 26a des Substrats 10a aufgebracht. Die Kontaktierungseinheit 14a ist aus einer weiteren, elektrisch leitfähigen Tinte hergestellt. Im vorliegenden Fall besteht die Kontaktierungseinheit 14a zumindest im Wesentlichen aus einer kupferdotierten Tinte. Die Kontaktierungseinheit 14a umfasst zwei Kontaktierungselemente 16a, 18a. Die Kontaktierungselemente 16a, 18a sind miteinander identisch. Die Kontaktierungselemente 16a, 18a sind im vorliegenden Fall als Elektroden und/oder Leiterbahnen ausgebildet. Die Kontaktierungselemente 16a, 18a weisen eine Quererstreckung von etwa 1,5 mm auf. Die Kontaktierungselemente 16a, 18a weisen eine zumindest im Wesentlichen konstante Dicke auf. Die Kontaktierungselemente 16a, 18a weisen eine Dicke von etwa 100 µm auf. Die Kontaktierungselemente 16a, 18a sind mit dem Sensorelement 12a elektrisch kontaktiert. Die Kontaktierungselemente 16a, 18a sind im vorliegenden Fall dazu vorgesehen, das Sensorelement 12a unmittelbar mit einer Messeinheit (nicht dargestellt) zu verbinden. Alternativ ist auch denkbar, dass zumindest ein Kontaktierungselement dazu vorgesehen ist, ein Sensorelement mittelbar mit einer Auswerteeinheit und/oder einer Messeinheit zu verbinden. Ferner kann eine Kontaktierungseinheit auch eine beliebige andere Anzahl an Kontaktierungselementen aufweisen. Ferner können Kontaktierungselemente eine beliebige andere Form und/oder beliebige andere Dimensionen aufweisen. Ferner ist denkbar, dass eine elektrische Kontaktierung zumindest eines Sensorelements über zumindest ein elektrisches Kabel erfolgt.

Ein Verfahren zur Herstellung der Kochfeldvorrichtung erfolgt zumindest im Wesentlichen in zwei Schritten.

In einem ersten Verfahrensschritt wird die Kontaktierungseinheit 14a hergestellt. Dazu wird die weitere elektrisch leitfähige Tinte, insbesondere die kupferdotierte Tinte, mittels eines tintenstrahlartigen Druckverfahrens auf das Substrat 10a, insbesondere die Innenseite 26a, aufgebracht. Die weitere elektrisch leitfähige Tinte wird dabei bei einer Temperatur von etwa 21°C auf das Substrat 10a aufgebracht. In diesem Zustand ist die weitere elektrisch leitfähige Tinte zumindest im Wesentlichen flüssig. Im vorliegenden Fall wird die weitere elektrisch leitfähige Tinte mittels eines Überdrucks durch eine Düse eines Druckkopfs (nicht dargestellt) auf das Substrat 10a aufgebracht. Ferner wird die weitere elektrisch leitfähige Tinte mit einer Trennstelle versehen. Die Trennstelle weist eine zu dem Sensorelement 12a zumindest im Wesentlichen korrespondierende Länge auf. Die beiden Enden der Trennstelle bilden in einem ausgehärteten Zustand Kontakte für das Sensorelement 12a.

Die weitere elektrisch leitfähige Tinte weist ferner Kupferpartikel auf. Die Kupferpartikel sind dazu vorgesehen, eine Leitfähigkeit der weiteren elektrisch leitfähigen Tinte zu erhöhen. Die Kupferpartikel weisen eine Größe von etwa 0,5 µm auf. Die weitere elektrisch leitfähige Tinte weist dabei eine Leitfähigkeit von etwa 40·10⁶ S/m auf.

Anschließend wird die weitere elektrisch leitfähige Tinte ausgehärtet. Im vorliegenden Fall wird die weitere elektrisch leitfähige Tinte in einem Reflow-Ofen ausgehärtet. Die weitere elektrisch leitfähige Tinte wird bei einer Temperatur von 200°C während einer Zeit von 8 min ausgehärtet. Während der Aushärtephase verdunstet ein Lösungsmittel in der weiteren elektrisch leitfähigen Tinte. In einem ausgehärteten Zustand bildet die weitere elektrisch leitfähige Tinte die Kontaktierungselemente 16a, 18a.

In einem zweiten Verfahrensschritt wird das Sensorelement 12a hergestellt. Dazu wird die elektrisch leitfähige Tinte, insbesondere das silberdotierte Zinkoxid, mittels eines zu dem ersten Verfahrensschritt analogen tintenstrahlartigen Druckverfahrens auf das Substrat 10a, insbesondere die Innenseite 26a, aufgebracht. Die elektrisch leitfähige Tinte wird bei einer Temperatur von etwa 21°C auf das Substrat 10a aufgebracht. Die elektrisch leitfähige Tinte wird dabei zwischen den Kontaktierungselementen 16a, 18a angeordnet. Die elektrisch leitfähige Tinte weist ferner Silberpartikel auf. Die Silberpartikel sind dazu vorgesehen, eine Leitfähigkeit der elektrisch leitfähigen Tinte zu erhöhen. Die Silberpartikel weisen eine Größe von etwa 0,1 µm auf. Anschließend wird die elektrisch leitfähige Tinte auf eine zu dem ersten Verfahrensschritt analoge Weise ausgehärtet. In einem ausgehärteten Zustand bildet die elektrisch leitfähige Tinte das Sensorelement 12a.

Alternativ ist auch denkbar in einem ersten Verfahrensschritt ein Sensorelement und in einem zweiten Verfahrensschritt eine Kontaktierungseinheit herzustellen. Ferner ist denkbar ein Sensorelement und eine Kontaktierungseinheit in demselben Verfahrensschritt und insbesondere gleichzeitig auf ein Substrat aufzubringen und insbesondere zusammen auszuhärten.

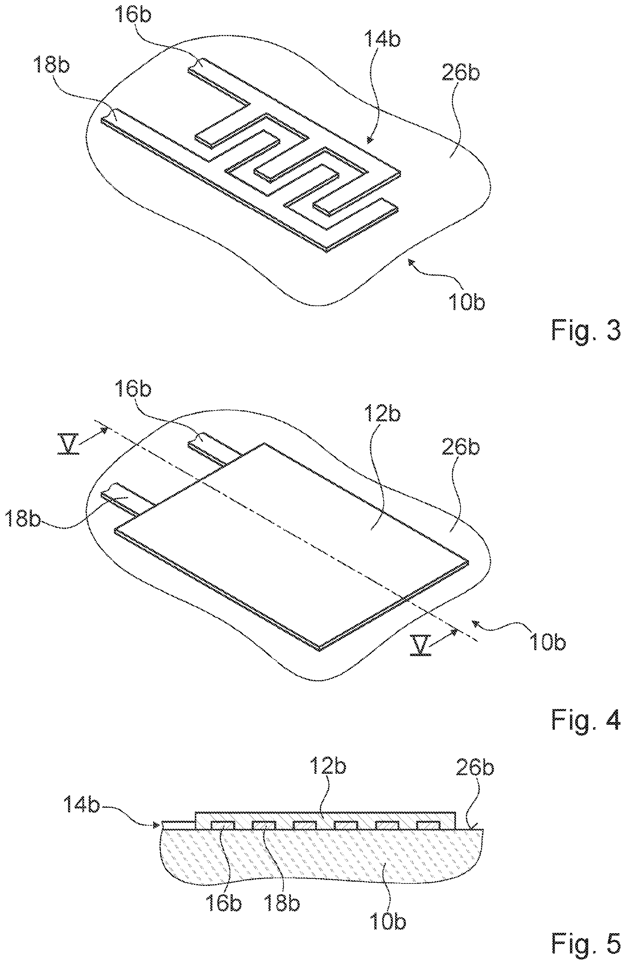

In den Figuren 3 bis 5 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des anderen Ausführungsbeispiels, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In dem Ausführungsbeispiel der Figuren 3 bis 5 ist der Buchstabe a durch den Buchstaben b ersetzt.

Die Figuren 3 bis 5 zeigen eine weitere Kochfeldvorrichtung mit einem als Induktionskochfeldplatte ausgebildeten Substrat 10b. In diesem Fall weist eine Kontaktierungseinheit 14b jedoch zwei als Interdigitalelektroden ausgebildete Kontaktierungselemente 16b, 18b auf.

Figur 3 zeigt die Kochfeldvorrichtung dabei in einem unvollständigen Zustand, insbesondere in einem ersten Verfahrensschritt, wobei lediglich die Kontaktierungselemente 16b, 18b auf dem Substrat 10b, insbesondere einer Innenseite 26b, angeordnet sind. Die Kontaktierungselemente 16b, 18b sind kammartig und/oder fingerartig ausgebildet. Die Kontaktierungselemente 16b, 18b sind als ineinandergreifende Interdigitalelektroden ausgebildet. Die Kontaktierungselemente 16b, 18b sind mit als Leiterbahnen ausgebildeten weiteren Kontaktierungselementen (nicht dargestellt) elektrisch leitend verbunden. Die weiteren Kontaktierungselemente sind unmittelbar mit einer Messeinheit (nicht dargestellt) verbunden.

Die Figuren 4 und 5 zeigen die Kochfeldvorrichtung in einem vollständig hergestellten Zustand. Ein Sensorelement 12b ist mittels eines tintenstrahlartigen Druckverfahrens auf die Innenseite 26b des Substrats 10b aufgebracht. Ferner ist das Sensorelement 12b oberhalb der Kontaktierungselemente 16b, 18b angeordnet. Demnach sind die Kontaktierungselemente 16b, 18b zu zumindest teilweise zwischen dem Substrat 10b, insbesondere der Innenseite 26a, und dem Sensorelement 12b angeordnet. Hierdurch kann insbesondere eine Messempfindlichkeit verbessert werden. Alternativ ist jedoch auch denkbar, ein Sensorelement zwischen einem Substrat, insbesondere einer Innenseite des Substrats, und einem Kontaktierungselement, insbesondere einer Interdigitalelektrode, anzuordnen.

### Bezugszeichen

- 10: Substrat
- 12: Sensorelement
- 14: Kontaktierungseinheit
- 16: Kontaktierungselement
- 18: Kontaktierungselement
- 20: Hausgerät
- 22: Heizzone
- 24: Außenseite
- 26: Innenseite

## Patentansprüche

1. Kochfeld mit einer Kochfeldvorrichtung mit zumindest einem Substrat (10a; 10b) und zumindest einem an dem zumindest einen Substrat (10a; 10b) angeordneten Sensorelement (12a; 12b), wobei das zumindest eine Sensorelement (12a; 12b) mittels eines Druckverfahrens auf das zumindest eine Substrat (10a; 10b) aufgebracht ist, wobei das zumindest eine Sensorelement (12a; 12b) als Temperatursensor ausgebildet ist, wobei das zumindest eine Substrat (10a; 10b) als eine Kochfeldplatte ausgebildet ist, **dadurch gekennzeichnet, dass** das zumindest eine Sensorelement (12a, 12b) mittels eines tintenstrahlartigen Druckverfahrens auf das zumindest eine Substrat (10a, 10b) aufgebracht ist.

2. Kochfeld nach Anspruch 1, **dadurch gekennzeichnet, dass** das zumindest eine Sensorelement (12a; 12b) zumindest teilweise aus einer elektrisch leitfähigen Tinte hergestellt ist.

3. Kochfeld nach einem der vorhergehenden Ansprüche, **dadurch gekennzeichnet, dass** das zumindest eine Sensorelement (12a; 12b) zumindest teilweise aus silberdotiertem Zinkoxid besteht.

4. Kochfeld nach einem der vorhergehenden Ansprüche, **dadurch gekennzeichnet, dass** das zumindest eine Substrat (10a; 10b) zumindest teilweise aus Glas und/oder Glaskeramik besteht.

5. Kochfeld nach einem der vorhergehenden Ansprüche, **dadurch gekennzeichnet, dass** die Kochfeldvorrichtung zumindest eine Kontaktierungseinheit (14a; 14b) aufweist, welche mittels eines weiteren Druckverfahrens auf das zumindest eine Substrat (10a; 10b) aufgebracht ist.

6. Kochfeld nach Anspruch 5, **dadurch gekennzeichnet, dass** die zumindest eine Kontaktierungseinheit (14b) zumindest ein Kontaktierungselement (16b, 18b) aufweist, welches zumindest teilweise zwischen dem zumindest einen Substrat (10b) und dem zumindest einen Sensorelement (12b) angeordnet ist.

7. Kochfeld nach Anspruch 5 oder 6, **dadurch gekennzeichnet, dass** die zumindest eine Kontaktierungseinheit (14b) zumindest ein Kontaktierungselement (16b, 18b) aufweist, welches als Interdigitalelektrode ausgebildet ist.

8. Verfahren zur Herstellung eines Kochfelds mit einer Kochfeldvorrichtung, nach einem der Ansprüche 1 bis 7, mit zumindest einem Substrat (10a; 10b) und mit zumindest einem an dem zumindest einen Substrat (10a; 10b) angeordneten Sensorelement (12a; 12b), wobei das zumindest eine Sensorelement (12a; 12b) mittels eines Druckverfahrens auf das zumindest eine Substrat (10a; 10b) aufgebracht wird, wobei das zumindest eine Sensorelement (12a; 12b) als Temperatursensor ausgebildet wird, wobei eine Kochfeldplatte als das zumindest eine Substrat (10a; 10b) verwendet wird, **dadurch gekennzeichnet, dass** das zumindest eine Sensorelement (12a; 12b) mittels eines tintenstrahlartigen Druckverfahrens auf das zumindest eine Substrat (10a; 10b) aufgebracht wird.

9. Verfahren nach Anspruch 8, **dadurch gekennzeichnet, dass** die zumindest eine elektrisch leitfähige Tinte zumindest im Wesentlichen bei Raumtemperatur aufgebracht wird.

10. Verfahren nach Anspruch 8 oder 9, **dadurch gekennzeichnet, dass** die zumindest eine elektrisch leifähige Tinte bei einer Temperatur zwischen 150°C und 250°C während einer Zeit zwischen 4 min und 12 min ausgehärtet wird.

## Claims

1. Hob with a hob apparatus with at least one substrate (10a; 10b) and at least one sensor element (12a; 12b) arranged on the at least one substrate (10a; 10b), wherein the at least one sensor element (12a; 12b) is attached to the at least one substrate (10a; 10b) by means of a printing method, wherein the at least one sensor element (12a; 12b) is embodied as a temperature sensor, wherein the at least one substrate (10a; 10b) is embodied as a hob plate, **characterised in that** the at least one sensor element (12a; 12b) is attached to the at least one substrate (10a; 10b) by means of an inkjet-type printing method.

2. Hob according to claim 1, **characterised in that** the at least one sensor element (12a; 12b) is at least partially produced from an electrically conductive ink.

3. Hob according to one of the preceding claims, **characterised in that** the at least one sensor element (12a; 12b) at least partially consists of silver-doped zinc oxide.

4. Hob according to one of the preceding claims, **characterised in that** the at least one substrate (10a; 10b) at least partially consists of glass and/or glass ceramic.

5. Hob according to one of the preceding claims, **characterised in that** the hob apparatus has at least one contacting unit (14a; 14b), which is attached to the at least one substrate (10a; 10b) by means of a further printing method.

6. Hob according to claim 5, **characterised in that** the at least one contacting unit (14b) has at least one contacting element (16b, 18b), which is arranged at least partially between the at least one substrate (10b) and the at least one sensor element (12b).

7. Hob according to claim 5 or 6, **characterised in that** the at least one contacting unit (14b) has at least one contacting element (16b, 18b), which is embodied as an integer digital electrode.

8. Method for producing a hob with a hob apparatus, according to one of claims 1 to 7, with at least one substrate (10a, 10b) and with at least one sensor element (12a; 12b) arranged on the at least one substrate (10a; 10b), wherein the at least one sensor element (12a; 12b) is attached to the at least one substrate (10a; 10b) by means of a printing method, wherein the at least one sensor element (12a; 12b) is embodied as a temperature sensor, wherein a hob plate is used as the at least one substrate (10a; 10b), **characterised in that** the at least one sensor element (12a; 12b) is attached to the at least one substrate (10a; 10b) by means of an inkjet-type printing method.

9. Method according to claim 8, **characterised in that** the at least one electrically conductive ink is attached essentially at room temperature.

10. Method according to claim 8 or 9, **characterised in that** the at least one electrically conductive ink is cured at a temperature between 150°C and 250°C during a time between 4 min and 12 min.

## Revendications

1. Table de cuisson comprenant un dispositif de table de cuisson comportant au moins un substrat (10a; 10b) et au moins un élément de détection (12a ; 12b) se trouvant sur le au moins un substrat (10a ; 10b), dans laquelle le au moins un élément de détection (12a ; 12b) est appliqué au au moins un substrat (10a ; 10b) au moyen d'un procédé d'impression, le au moins un élément de détection (12a ; 12b) étant réalisé en tant que détecteur de température, le au moins un substrat (10a ; 10b) étant réalisé en tant que plaque de table de cuisson, **caractérisée en ce que** le au moins un élément de détection (12a, 12b) est appliqué au au moins un substrat (10a, 10b) au moyen d'un procédé d'impression de type jet d'encre.

2. Table de cuisson selon la revendication 1, **caractérisée en ce que** le au moins un élément de détection (12a ; 12b) est fabriqué au moins en partie à partir d'une encre électro-conductrice.

3. Table de cuisson selon l'une des revendications précédentes, **caractérisée en ce que** le au moins un élément de détection (12a ; 12b) est au moins en partie constitué d'oxyde de zinc dopé à l'argent.

4. Table de cuisson selon l'une des revendications précédentes, **caractérisée en ce que** le au moins un substrat (10a ; 10b) est au moins en partie constitué de verre et/ou de vitrocéramique.

5. Table de cuisson selon l'une des revendications précédentes, **caractérisée en ce que** le dispositif de table de cuisson comprend au moins une unité de métallisation (14a ; 14b), laquelle est appliquée sur le au moins un substrat (10a ; 10b) au moyen d'un autre procédé d'impression.

6. Table de cuisson selon la revendication 5, **caractérisée en ce que** la au moins une unité de métallisation (14b) comprend au moins un élément de métallisation (16b, 18b), lequel se trouve au moins en partie entre le au moins un substrat (10b) et le au moins un élément de détection (12b).

7. Table de cuisson selon la revendication 5 ou 6, **caractérisée en ce que** la au moins une unité de métallisation (14b) comprend au moins un élément de métallisation (16b, 18b), lequel est réalisé en tant qu'électrode interdigitée.

8. Procédé de fabrication d'une table de cuisson comprenant un dispositif de table de cuisson selon l'une des revendications 1 à 7, comprenant au moins un substrat (10a; 10b) et au moins un élément de détection (12a ; 12b) se trouvant sur le au moins un substrat (10a ; 10b), dans lequel le au moins un élément de détection (12a ; 12b) est appliqué sur le au moins un substrat (10a ; 10b) au moyen d'un procédé d'impression, le au moins un élément de détection (12a ; 12b) étant réalisé en tant que détecteur de température, une plaque de table de cuisson servant du au moins un substrat (10a ; 10b), **caractérisé en ce que** le au moins un élément de détection (12a, 12b) est appliqué sur le au moins un substrat (10a, 10b) au moyen d'un procédé d'impression de type jet d'encre.

9. Procédé selon la revendication 8, **caractérisé en ce que** la au moins une encre électro-conductrice est appliquée au moins essentiellement à température ambiante.

10. Procédé selon la revendication 8 ou 9, **caractérisé en ce que** la au moins une encre électro-conductrice se solidifie à une température entre 150°C et 250°C pendant un lapse de temps allant de 4 min. à 12 min.
